# FASCICULE DE BREVET EUROPEEN

(11) **EP 2 281 110 B1**
(45) Date de publication et mention de la délivrance du brevet: **06.11.2013**
(21) Numéro de dépôt: 09731006.4
(22) Date de dépôt: 24.03.2009
(51) Int. Cl.: F01D 17/20, F01D 17/14, F02C 7/06, F02C 7/28, F01D 25/16, F01D 25/18

(54) **DISPOSITIF ET PROCEDE D'EQUILIBRAGE DE PRESSION DANS UNE ENCEINTE PALIER DE TURBOREACTEUR**
VERFAHREN UND VORRICHTUNG ZUM DRUCKAUSGLEICH EINER ÖLWANNE FÜR LAGER IM EINEM TURBOSTRAHLTRIEBWERK
DEVICE AND METHOD FOR BALANCING PRESSURE IN A TURBOJET BEARING HOUSING

(30) Priorité: 26.03.2008 FR 0851923
(43) Date de publication de la demande: 09.02.2011
(73) Titulaire: Snecma, 75015 Paris (FR)
(72) Inventeur: FINTESCU, Ion, F-75017 Paris (FR); GILLE, Laurent, F-77190 Dammarie Les Lys (FR); MOURLAN, Jean-Pierre, F-94130 Nogent Sur Marne (FR)
(74) Mandataire: Cardy, Sophie Marie
(86) Numéro de dépôt international: PCT/FR2009/050500
(87) Numéro de publication internationale: WO 2009/125120

(56) Documents cités:
- WO-A-01/31235
- US-A- 5 114 446
- US-A- 5 257 903
- US-A- 6 033 450
- US-A1- 2006 267 290

## Description

L'invention concerne un dispositif et un procédé d'équilibrage de pression dans au moins une enceinte palier de turboréacteur.

Dans le domaine des turboréacteurs, on utilise des enceintes dans lesquelles se trouve un palier de roulement entre une partie mobile en rotation et une partie fixe, cette enceinte présentant une circulation d'huile servant à la lubrification et au refroidissement des composants.

Dans ce qui suit, les adjectifs « fixe », « mobile » et « mobile en rotation » qualifient l'absence de mouvement ou le mouvement de la pièce ou de la portion considérée par rapport au turboréacteur dans son ensemble.

Afin que cette huile reste contenue à l'intérieur de l'enceinte, avant la récupération et son recyclage dans le circuit, et afin qu'elle ne pollue pas d'autres cavités de la veine moteur, on place ladite enceinte sous une pressurisation d'air.

Or cet air ayant déjà circulé dans les étages amont du moteur, il a déjà été comprimé puis il a été injecté dans l'enceinte à une pression proche de la pression atmosphérique de sorte qu'il n'a pas ou pratiquement pas participé à la poussée du moteur. Il en découle un impact défavorable en termes de performance et en particulier de consommation de carburant pour un niveau de poussée requis.

Habituellement, afin de réduire les débits d'air pénétrant dans les enceintes et ainsi la consommation de carburant et d'huile, on cherche à développer des joints aussi étanches que possible aux bornes des enceintes. Des joints de type labyrinthes peu étanches peuvent ainsi être remplacés par des systèmes d'étanchéité avancés plus performants mais plus complexes et plus coûteux, tels que des joints à brosse ou des joints à segments de carbone.

Dans le cas de ces étanchéités avancées, on rencontre cependant d'autres inconvénients car outre leur coût accru, elles présentent des risques de défaillance importants dus à leur complexité technologique accrue par rapport aux labyrinthes : fragilité au montage, pollution de l'enceinte à huile par des particules d'usure, durée de vie inférieure aux labyrinthes.

Egalement, on constate que les pressurisations en air variant avec le régime du moteur, il en découle des situations très différentes en fonction du régime du moteur. En effet, on fournit un débit d'air minimum dans l'enceinte aux bas régimes du moteur (ralenti) pour pressuriser suffisamment l'enceinte et éviter des fuites d'huile. Il en découle des différences de pressions importantes aux bornes des joints dans les hauts régimes du moteur (régime de croisière ou plein gaz) car on fournit un débit d'air particulièrement important du fait que l'air est davantage comprimé à haut régime alors que la contre-pression dans l'enceinte reste à peine supérieure à la pression atmosphérique.

Les joints étant soumis à de fortes différences de pression et de plus à de grandes variations de ces différences de pression, ils ont tendance à s'user plus vite d'où un risque de défaillance plus important.

Les documents US 2006/267290 et US 6 033 450 prévoient une modification de la pression d'air, tandis que les documents US 5 257 903, US 5 114 446 et WO 01/31235 envisagent une variation de la chute de pression en sortie de l'enceinte. Ces solutions ne sont cependant pas satisfaisantes.

La présente invention a pour objectif de fournir une solution permettant de surmonter les inconvénients de l'art antérieur et en particulier offrant la possibilité de fournir un système de pressurisation des enceintes moteur permettant que la différence de pression aux bornes des joints varie moins en fonction du régime du moteur.

A cet effet, la présente invention porte sur un dispositif d'équilibrage de pression dans au moins une enceinte palier de turboréacteur, ladite enceinte étant délimitée entre un rotor mobile en rotation autour d'un axe et un stator, généralement formé d'un ensemble de parois fixes, comprenant un support de palier sur lequel est monté un palier s'appuyant sur ledit rotor, ladite enceinte comprenant des moyens d'alimentation en liquide de lubrification dudit palier, des moyens d'arrivée d'air amenant dans l'enceinte de l'air sous pression provenant d'un circuit de pressurisation (formé d'une dérivation de la veine des gaz moteur), au moins un système d'étanchéité placé entre le stator et le rotor à l'avant et/ou à l'arrière dudit palier, des moyens de récupération du liquide de lubrification (via un ou plusieurs circuits de récupération pour réutilisation du liquide de lubrification) et des moyens d'évacuation de l'air, préalablement séparé du liquide de lubrification et ne contenant donc plus que des traces de liquide de lubrification, en direction d'un circuit de dégazage.

De façon caractéristique, ce dispositif d'équilibrage de pression comporte, en aval de l'enceinte palier et dans le circuit de dégazage, un système de régulation du débit d'air évacué en fonction du régime moteur qui permet audit débit d'air d'être variable en fonction du régime du moteur, de rester non nul et de réduire la valeur du débit d'air évacué à haut régime par rapport au cas où le système de régulation n'est pas intégré, c'est-à-dire est absent.

Dans ce qui suit, l'expression « en aval de l'enceinte » se rapporte au(x) débit(s) d'air sortant de l'enceinte considérée.

De cette manière, on comprend que par la mise en place, en aval de l'enceinte, d'une perte de charge variable en fonction du régime moteur on maintient une différence de pression minimale quel que soit le régime du moteur, et avantageusement une différence de pression sensiblement constante aux bornes des étanchéités de l'enceinte.

En effet, grâce au système de régulation, on obtient une valeur du débit d'air évacué toujours faible, et surtout on réduit la valeur du débit d'air évacué à haut régime de sorte qu'à haut régime on est en présence d'un débit d'air évacué plus faible qu'il ne le serait en l'absence du système de régulation.

En effet, lorsque le système de régulation est absent (en conformité avec les solutions de l'art antérieur qui ne prévoient pas de système à section de passage variable en fonction du régime du moteur, c'est-à-dire en fonction de la vitesse de rotation du rotor), le débit d'air massique évacué par dégazage est d'autant plus élevé que la différence entre la pression source fournie par le compresseur et la contre-pression en aval du circuit de dégazage (en général égale à la pression ambiante) est élevée, cette différence de pression augmentant avec le régime moteur. Il faut noter que lorsque le système de régulation est absent, le débit d'air massique de dégazage rapporté au débit d'air de veine primaire (généralement noté W25) a tendance à être relativement constant en fonction du régime moteur puisqu'aussi bien le débit d'air massique de dégazage que le débit d'air de veine primaire augmentent avec le régime moteur.

Selon l'invention :
- pour des régimes moteur faibles, le débit d'air reste non nul et est aussi réduit que possible par rapport au cas où le système de régulation est absent. Il s'agit typiquement de régimes moteurs situés entre l'arrêt et le ralenti où la pression d'air, délivrée par le compresseur fournissant l'air de pressurisation des enceintes du moteur, est faible, nécessitant ainsi un chemin de dégazage avec une obstruction aussi réduite que possible, ceci afin de réduire autant que possible les pertes de charges le long du circuit de dégazage et avoir ainsi des enceintes palier suffisamment pressurisées ;
- pour des régimes moteur plus élevés, le débit d'air est réduit de manière avantageuse par rapport au cas où le système de régulation du débit d'air est absent. Il s'agit typiquement de régimes de rotation situés au-delà du ralenti sol et en particulier pour des cas de fonctionnement de plein gaz, de montée et de croisière où la pressurisation des enceintes moteur est assurée avec une bonne marge du fait de la pression d'air importante délivrée par le compresseur pour la pressurisation des enceintes palier.

Ainsi, grâce à une solution simple, d'une part les systèmes d'étanchéité sont moins sollicités et d'autre part par la diminution variable de la perte de charge, on augmente la pression d'air dans les enceintes, ce qui permet de réduire les débits d'air pénétrant dans ces enceintes à huile, d'où une économie d'air prélevé sur la veine moteur.

Cette solution présente aussi l'avantage supplémentaire, de permettre, outre la réduction de la quantité d'air servant à la pressurisation des enceintes à huile, également une réduction de la consommation d'huile qui est entraînée par le flux d'air en direction du circuit de dégazage.

De plus, puisque en augmentant les pressions dans les enceintes, on augmente également les pressions d'aspiration des pompes de récupération d'huile du circuit de dégazage, il en découle la possibilité de réduire la capacité et donc la taille et le poids de ces pompes.

Globalement, grâce à la solution selon la présente invention, il est possible de s'affranchir de l'utilisation de systèmes d'étanchéité avancés au moyen d'une solution simple à mettre en oeuvre et qui ne provoque aucun risque de panne sévère du fait du débit d'air minimal non nul qui garantit une évacuation minimale de l'air de pressurisation.

Avantageusement, ledit système de régulation est tel que le débit d'air évacué est variable en fonction du régime du moteur. Le système de régulation est tel que l'on obtient une valeur de débit d'air évacué toujours faible, et surtout la valeur du débit d'air évacué à haut régime est réduite de sorte qu'à haut régime on est en présence d'un débit d'air évacué plus faible qu'il ne le serait en l'absence du système de régulation.

Selon une disposition préférentielle, ledit système de régulation est disposé dans une canalisation du circuit de dégazage et modifie, en fonction du régime moteur, la section de passage de la canalisation entre une section de passage minimale et une section de passage maximale.

De cette façon, on peut adapter le circuit de dégazage pré existant pour y ajouter le système de régulation selon l'invention. De plus, on peut placer le système de régulation en aval d'un ou de plusieurs palier(s), ou en aval de tous les paliers.

Avantageusement, selon une autre disposition, ledit système de régulation comporte un obturateur mobile entre une position fermée dans laquelle ledit obturateur occupe une grande partie de la section de la canalisation qui présente alors une section de passage minimale et une position ouverte dans laquelle ledit obturateur occupe une petite partie de la section de la canalisation qui présente alors une section de passage maximale, ledit obturateur pouvant prendre toutes les positions intermédiaires entre ladite position fermée et ladite position ouverte.

De cette façon, on assure de façon simple, la variation de section de passage et donc de perte de charge dans la canalisation du circuit de dégazage.

De préférence, ladite section de passage minimale est non nulle.

La présente invention se rapporte également à un procédé d'équilibrage de pression dans au moins une enceinte palier de turboréacteur, ladite enceinte étant délimitée entre un rotor mobile en rotation autour d'un axe et un stator, généralement formé d'un ensemble de parois fixes, comprenant un support de palier sur lequel est monté un palier s'appuyant sur ledit rotor, ladite enceinte comprenant des moyens d'alimentation en liquide de lubrification dudit palier, des moyens d'arrivée d'air amenant dans l'enceinte de l'air sous pression provenant d'un circuit de pressurisation (formé d'une dérivation de la veine des gaz moteur), au moins un système d'étanchéité placé entre le stator et le rotor à l'avant et/ou à l'arrière dudit palier, des moyens de récupération du liquide de lubrification (via un ou plusieurs circuits de récupération pour réutilisation du liquide de lubrification) et des moyens d'évacuation de l'air, préalablement séparé du liquide de lubrification et ne contenant donc plus que des traces de liquide de lubrification, via un circuit de dégazage.

De façon caractéristique, le procédé consiste à réguler, en fonction du régime du moteur, le débit d'air évacué en aval de l'enceinte palier, dans le circuit de dégazage, ledit débit d'air avec un débit d'air variable en fonction du régime du moteur, non nul et plus faible à haut régime qu'il ne le serait en l'absence du procédé d'équilibrage de pression, c'est-à-dire s'il n'y a pas de régulation du débit d'air.

De façon préférentielle, le débit d'air est évacué dans le circuit de dégazage avec un débit d'air variable en fonction du régime du moteur.

En particulier, on prévoit que le débit d'air évacué est minimal et non nul pour un régime moteur bas et variable, en allant en augmentant avec l'augmentation du régime moteur jusqu'à un débit d'air évacué maximal.

En pratique, il ne s'agit pas nécessairement de réaliser une augmentation continue du débit massique d'air évacué avec le régime moteur sur toute la plage de ce régime moteur : la tendance est d'avoir une augmentation progressive du débit d'air en fonction du régime moteur dans toute la plage couvrant les faibles régimes moteur (ou faibles vitesses de rotation du rotor), et ensuite pour des régimes moteur plus élevés, il perdure une augmentation qui est limitée à partir d'un moment, par une progression moins forte de cette augmentation et/ou par maintien constant de cette augmentation et/ou, éventuellement, par une légère réduction du débit d'air, ce qui aboutit dans tous les cas, pour une hauteur donnée du régime moteur élevé, à un débit d'air évacué maximal.

De cette façon, le débit d'air évacué est minimal et non nul pour un régime moteur bas et variable, en allant en augmentant avec l'augmentation du régime moteur jusqu'à atteindre des régimes moteur plus élevés (du type plein gaz, montée ou croisière) où le procédé et le dispositif d'équilibrage de pression permettent avantageusement de limiter cette augmentation du débit avec l'augmentation du régime moteur.

D'autres avantages et caractéristiques de l'invention ressortiront à la lecture de la description suivante faite à titre d'exemple et en référence aux dessins annexés dans lesquels :
- la figure 1 est une vue en coupe axiale d'une enceinte avant selon l'art antérieur ;
- la figure 2 est une vue en coupe axiale d'une enceinte arrière selon l'art antérieur ;
- la figure 3 est une vue en coupe axiale agrandie d'une portion de la figure 2, représentant un dispositif d'équilibrage selon un premier mode de réalisation, le système de régulation étant dans une position ouverte ;
- la figure 4 est une vue de dessus du détail IV de la figure 3 ;
- la figure 5 est similaire à la figure 3, le système de régulation du dispositif d'équilibrage étant dans une position fermée ;
- la figure 6 est une vue en coupe agrandie d'une portion de la figure 2, représentant un dispositif d'équilibrage selon une première variante d'un deuxième mode de réalisation, le système de régulation étant dans une position ouverte ;
- la figure 7 est similaire à la figure 6, le système de régulation du dispositif d'équilibrage étant dans une position fermée ;
- la figure 8 est une vue similaire à la figure 6 avec un dispositif d'équilibrage selon une deuxième variante du deuxième mode de réalisation, le système de régulation étant dans une position ouverte ;
- la figure 9 est similaire à la figure 8, le système de régulation du dispositif d'équilibrage étant dans une position fermée ;
- la figure 10 est une vue partielle selon la direction X de la figure 9 montrant le système de régulation du dispositif d'équilibrage dans la position fermée ;
- la figure 11 est une vue similaire à la figure 6 avec un dispositif d'équilibrage selon une troisième variante du deuxième mode de réalisation, le système de régulation étant dans une position ouverte ;
- la figure 12 est similaire à la figure 11, le système de régulation du dispositif d'équilibrage étant dans une position fermée ;
- la figure 13 est une vue partielle selon la direction XIII de la figure 12 montrant le système de régulation du dispositif d'équilibrage dans la position fermée ;
- la figure 14 est une demi vue en coupe axiale d'un turboréacteur présentant trois enceintes et un support d'équipements dans lequel le dispositif d'équilibrage selon l'invention est placé au niveau de ce support d'équipements.

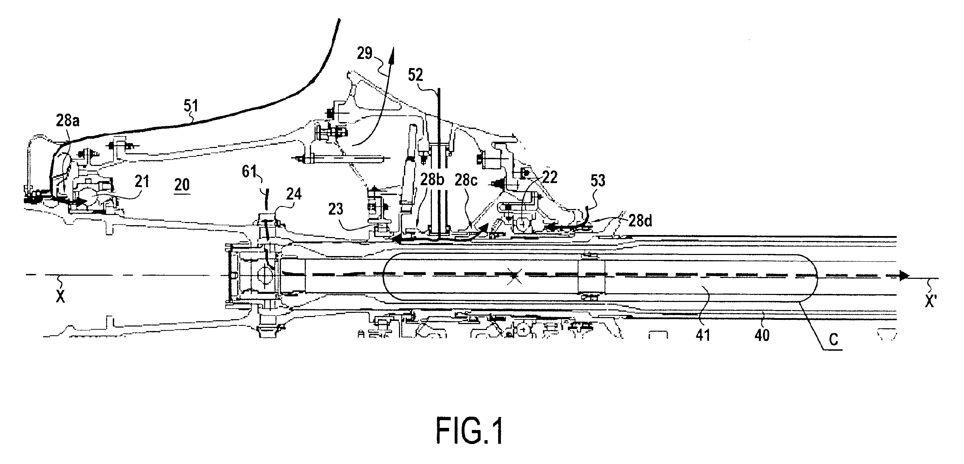

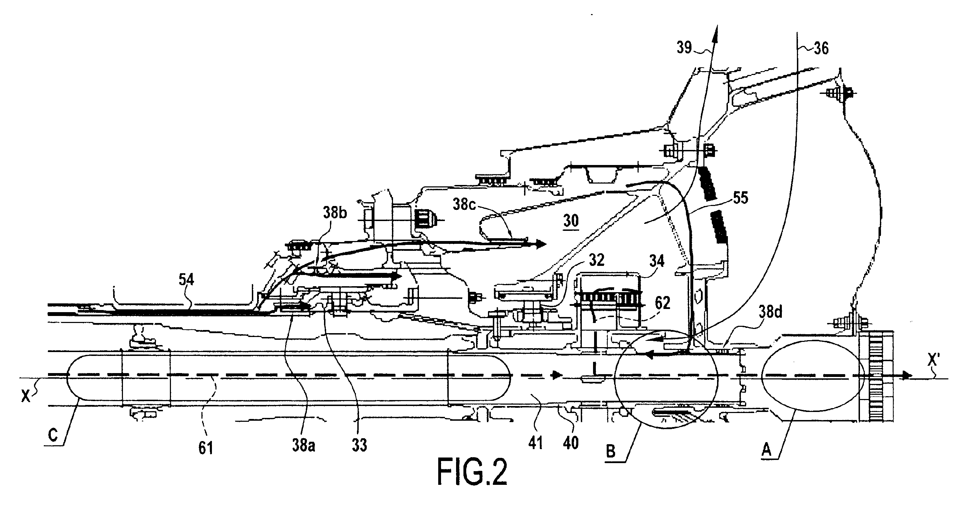

Sur les figures 1 et 2, on a représenté respectivement l'enceinte avant 20 contenant les paliers avant 21, 22 et 23 et l'enceinte arrière 30 contenant les paliers arrière 32 et 33 d'un turboréacteur pour lesquelles le rotor basse pression 40 contient une canalisation 41 qui évacue à la fois l'air et une partie de l'huile de lubrification entraînée par l'air et non retenue par le déshuileur, ce mélange ayant transité dans les enceintes avant 20 et arrière 30.

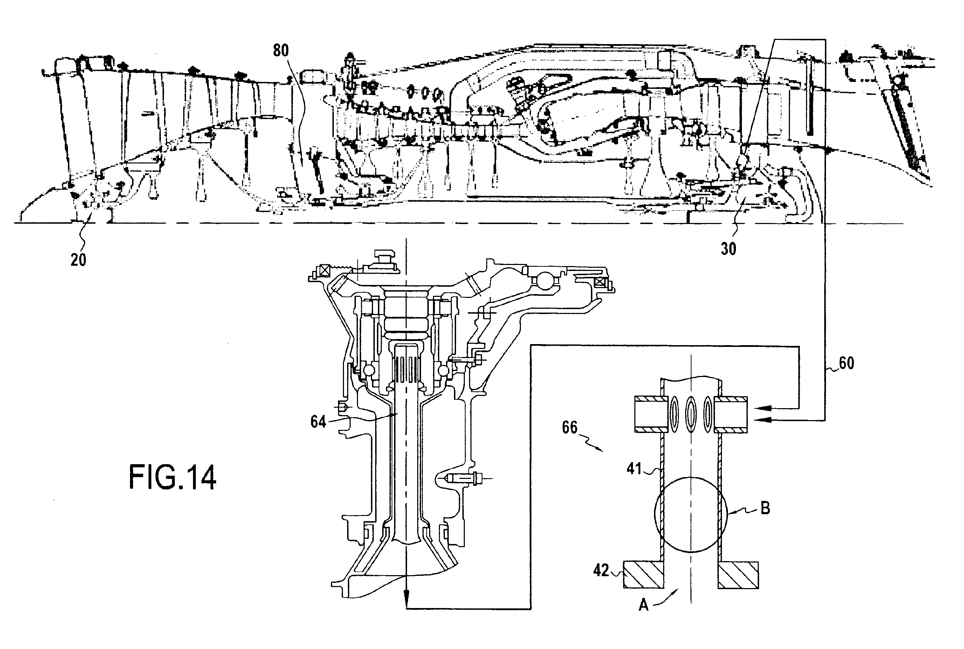

Ces enceintes avant 20 et arrière 30 sont localisées sur le turboréacteur de la figure 14.

Plus précisément, comme on le voit sur la figure 1, le circuit de pressurisation alimente l'enceinte avant 20 par trois flux (flèches 51, 52 et 53 en traits continus) d'air sous pression provenant de la veine des gaz moteurs, tandis que l'enceinte avant 20 reçoit de l'huile de lubrification par le biais de gicleurs.

Cette huile est essentiellement évacuée par un circuit de récupération du liquide de lubrification (flèche 29) depuis l'enceinte avant 20.

L'air (mélangé aux traces d'huile résiduelle) est évacué (flèche 61 en traits pointillés) par un déshuileur à cheminées 24 en direction du tube « center vent » ou tube central de ventilation formant la canalisation 41 qui est solidaire du rotor 40 et coaxiale (axe X-X') à l'intérieur de ce dernier. Des systèmes d'étanchéité formés de joints labyrinthe sont disposés aux emplacements 28a, 28b, 28c et 28d de l'enceinte avant 20 correspondant aux arrivées d'air sous pression.

L'air présent dans l'enceinte avant 20 et l'air évacué par le rotor 40 sont sensiblement à la pression atmosphérique, aux pertes de charges près du circuit de dégazage composé du tube « center vent » situé en aval du déshuileur 24. Les flux 51 à 53 d'air de pressurisation amènent un air sous pression P1 d'autant plus comprimé que le régime moteur augmente. Ainsi pour les régimes de « vol croisière » et « plein gaz », les pressions d'air de pressurisation P1 augmentent sensiblement par rapport à la pression atmosphérique ce qui entraîne d'importantes différences de pressions aux bornes des systèmes d'étanchéité 28a, 28b, 28c et 28d (de l'ordre de 0.5 à 1 bar sur la plupart des moteurs) et ainsi des débits d'air significatifs ne contribuant pas à la poussée du moteur.

Concernant l'enceinte arrière 30, le fonctionnement est le même au moyen des flux (flèches 54 et 55 en traits continus) d'air sous pression et de l'arrivée d'huile (flèche 36), en entrée. Cette huile est essentiellement évacuée par un circuit de récupération du liquide de lubrification (flèche 39) depuis l'enceinte arrière 30. L'évacuation de l'air (mélangé aux traces d'huile résiduelle) est réalisée par un déshuileur à cheminées 34 en direction du rotor 40 (flèche 62 en traits pointillés), des systèmes d'étanchéité formés de joints labyrinthe disposés aux emplacements 38a, 38b, 38c et 38d de l'enceinte arrière 30, correspondant aux arrivées d'air sous pression.

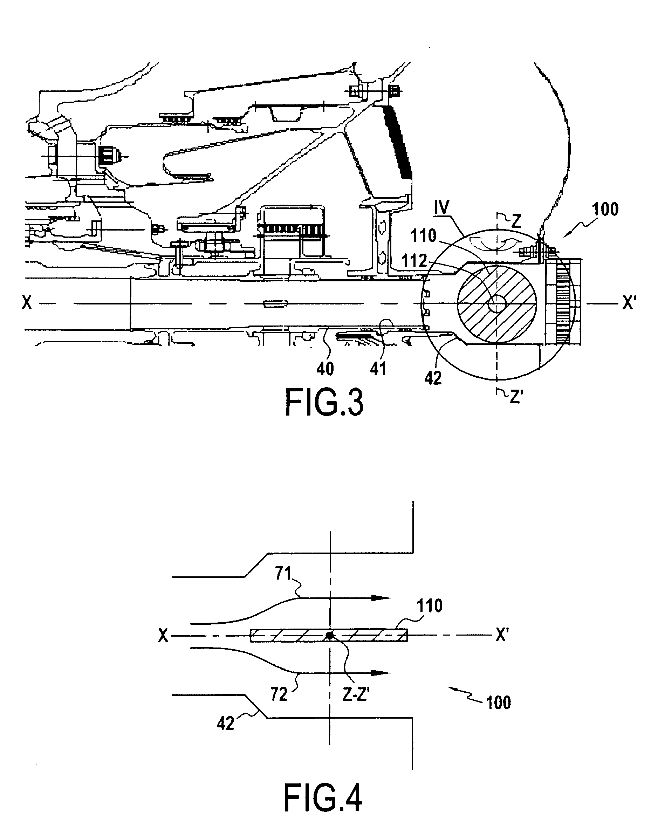

On se reportera maintenant aux figures 3 à 5 montrant un premier mode de réalisation du dispositif selon l'invention, qui a été adapté à la structure des figures 1 et 2, de sorte que seules les différences par rapport à ces figures sont décrites ci-après.

Selon ce premier mode de réalisation, la canalisation 42, dans laquelle est disposé l'obturateur du système de régulation 100, est fixe et ledit obturateur 110 est relié à des moyens de commande extérieurs à la canalisation 42 et aptes à commander la position de l'obturateur 110 dans la canalisation 42 en fonction du régime moteur.

Cette canalisation fixe 42 est dans le prolongement aval de la canalisation mobile en rotation 41 qui est liée en rotation au rotor 40.

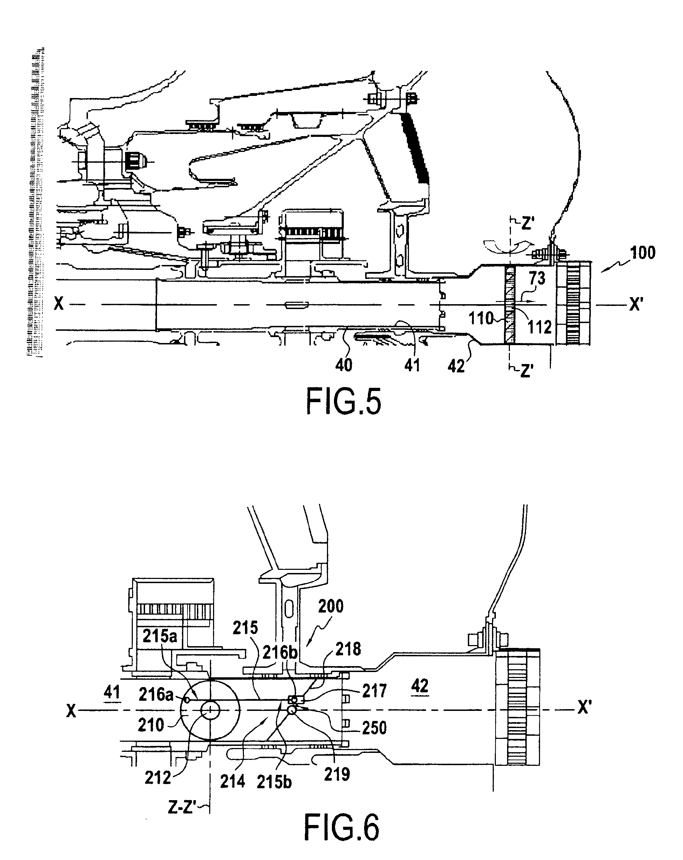

Comme on le voit sur les figures 3 à 5 l'obturateur 110 est une plaque montée de façon mobile en rotation autour d'un axe Z-Z' perpendiculaire à la direction principale X-X' de la canalisation 42, le plan principal de ladite plaque étant disposé transversalement dans la canalisation 42 dans la position fermée (voir figure 5) dans laquelle il subsiste ladite section de passage minimale 112 non nulle entre la plaque et la paroi de la canalisation 42 pour le passage du débit d'air minimal, et le plan principal de ladite plaque étant disposé parallèlement à la direction principale X-X' de la canalisation 42 dans la position ouverte (voir figures 3 et 4).

Ainsi, dans la position ouverte de l'obturateur 110 (voir figures 3 et 4), c'est la tranche du disque formant l'obturateur 110 qui voit le flux d'air, qui se divise de part et d'autre de l'obturateur 110 (flèches 71 et 72 sur la figure 4).

Ici, l'obturateur 110 est une plaque circulaire (un disque) percée en son centre et présentant un diamètre extérieur sensiblement égal au diamètre intérieur de la canalisation 42 dans laquelle l'obturateur 110 est placé.

On pourrait prendre un disque percé à un autre emplacement ou présentant un diamètre extérieur plus petit que le diamètre intérieur de la canalisation 42. On pourrait également utiliser une plaque non circulaire.

Il est souhaitable que dans la position fermée de l'obturateur 110 (figure 5), ce dernier ne remplisse pas toute la section de la canalisation 42 dans laquelle il est placé afin de laisser une section de passage minimale 112 permettant une évacuation de l'air (flèche 73 sur la figure 5).

Les moyens de commande de la position angulaire de l'obturateur 110 autour de l'axe Z-Z' ne sont pas représentés : ils sont extérieurs à la canalisation et reliés à l'obturateur par exemple par un arbre matériel montée autour de l'axe Z-Z'.

Selon une première possibilité, le régime moteur d'un des corps (basse pression, pression intermédiaire ou haute pression pour les moteurs conventionnels actuels) est le paramètre retenu compte tenu du fait qu'il augmente en même temps que la pression de l'air venant alimenter les enceintes avant 20 et arrière 30. Selon une autre possibilité constituant un mode de régulation plus fin, on utilise également des pressions comme paramètre(s) de régulation (par exemple la pression ambiante qui est la pression de refoulement de l'air évacué et/ou des pressions internes moteur représentatives de la pression de l'air de pressurisation).

Cet obturateur 110 est donc placé, selon ce premier mode de réalisation, sur une partie fixe du moteur sur le chemin d'évacuation de l'air de pressurisation des enceintes. La position angulaire de l'obturateur 110 autour de l'axe Z-Z' peut donc varier en fonction du ou des paramètres moteur de régulation choisis (régime ou pression(s)). Cette variation de position angulaire entraîne une variation de la section de passage (du débit) de l'air et donc des pertes de charges du système (les pertes de charges correspondant à une fonction du débit au carré).

Un deuxième mode de réalisation du dispositif selon l'invention va maintenant être présenté. Dans ce cas, on utilise un système de régulation passif et autonome, qui prend en compte la rotation du rotor 40, dont la vitesse varie avec le régime moteur, pour faire varier la position de l'obturateur, et de ce fait la section de passage de l'air dans la canalisation, donc le débit d'air lui-même.

Pour ce faire, la canalisation 41 est mobile en rotation par le fait qu'elle est reliée au rotor 40 basse pression et ledit obturateur est relié à des moyens de commande intégrés et liés à la canalisation mobile 41 et modifiant la position dudit obturateur en fonction de la vitesse de rotation du rotor 40. Dans ce qui précède, le terme « intégrés » signifie que les moyens de commande dudit obturateur sont solidaires de la canalisation mobile 41.

Un tel agencement est décrit ci-après pour trois variantes de réalisation données à titre d'exemples non limitatifs.

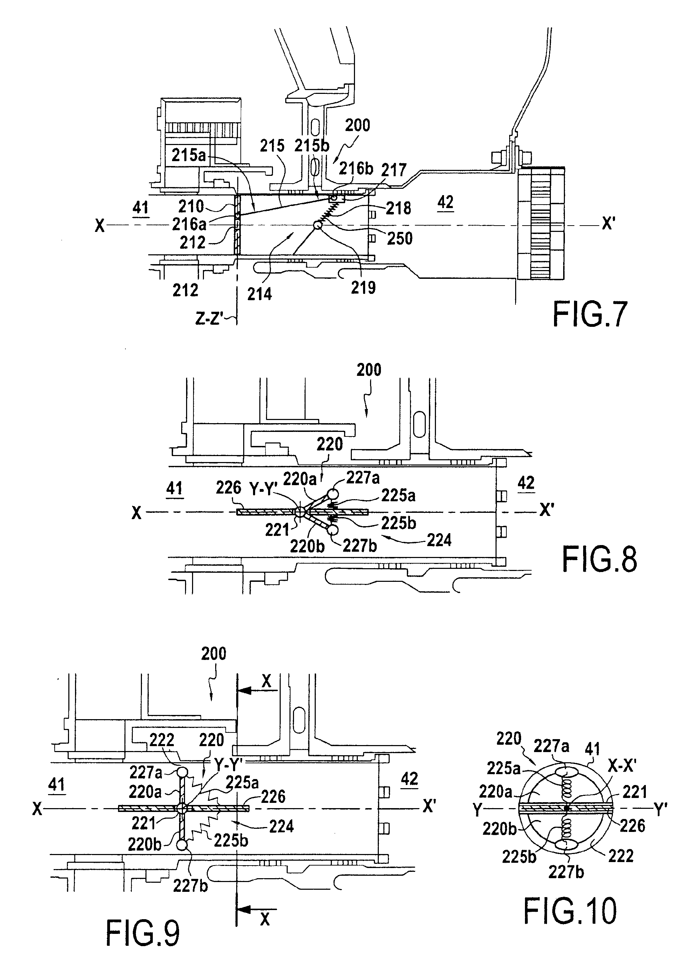

Selon une première variante du deuxième mode de réalisation, visible sur les figures 6 et 7, on utilise un système de régulation 200 comprenant un obturateur 210 du même type que celui du premier mode de réalisation qui est donc placé dans la canalisation mobile 41. Sur les figures 6 et 7, on a repris le cas d'un obturateur formé d'une plaque 210 en forme de disque percée en son centre (section de passage minimale 212), cet obturateur 210 étant mobile autour d'un axe Z-Z' perpendiculaire à l'axe de rotation X-X' du rotor 40.

Dans ce cas, les moyens de commande 214 sont logés dans la canalisation mobile 41 et comprennent une tige de commande 215 dont l'une (215a) des extrémités est reliée par une liaison rotule 216a à ladite plaque 210, une masselotte 217 reliée par une liaison rotule 216b à l'autre (215b) des extrémités de la tige de commande 215 et comprenant un perçage, et une tige d'entraînement 218 fixée à ladite canalisation 41 en étant disposée selon une direction oblique à un plan transversal à ladite canalisation 41, ladite masselotte 217 étant montée en coulissement par son perçage autour de ladite tige d'entraînement 218. Par exemple, les deux extrémités de la tige d'entraînement 218 sont encastrées dans les parois de la canalisation 41.

Ainsi, la masselotte 217 peut se déplacer le long de la tige d'entrainement 218. La liaison rotule 216a entre la plaque 210 et la tige de commande 215 est prévue à proximité du bord de la plaque 210, vers le diamètre perpendiculaire à l'axe Z-Z'.

On utilise de plus une butée 219 disposée sensiblement au milieu de la longueur de la tige d'entrainement 218 et qui définit la position de la masselotte 217, donc la position angulaire de la plaque 210, lorsque le rotor 40 est à l'arrêt. Des moyens de rappel, représentés à titre d'exemple sous la forme d'un ressort 250 sur les figures 6 et 7, agissent entre la butée 219 et la masselotte 217. A l'arrêt de la rotation du rotor, ces moyens de rappel exercent une force de rappel qui ramène la masselotte 217 au niveau de la butée 219.

Lors de la rotation du rotor 40 et de la canalisation mobile 41, la force centrifuge qui s'exerce sur la masselotte 217 permet de vaincre la force de rappel engendrée par le ressort 250 et ainsi à la masselotte 217 de se déplacer le long de la tige d'entrainement 218, et ce d'autant plus que le régime augmente.

La masselotte 217 ayant alors un déplacement avec une composante axiale X-X', elle entraîne, via la tige de commande 215, un mouvement de rotation de la plaque 210 autour de son axe Z-Z' d'autant plus important que le régime moteur est élevé. A régime maximal la plaque 210 se retrouve en position fermée, perpendiculaire à l'axe longitudinal X-X' du rotor 40 comme il est représenté sur la figure 7.

La variation de position de la plaque 210 modifie la section de passage de l'air dans la canalisation 41 et donc les pertes de charges.

L'avantage de cette solution avec un obturateur en forme de plaque 210 formant un clapet est de proposer une perte de charge en position ouverte très faible se réduisant à l'obstruction réalisée par la tranche de la plaque 210 et ensuite en aval par la tige d'entraînement et la masselotte 217.

Selon une deuxième variante du deuxième mode de réalisation, visible sur les figures 8 à 10, on utilise un système de régulation 200 comprenant un obturateur 220 d'un type différent, toujours placé dans la canalisation mobile 41.

Comme on le voit, sur les figures 8 à 10, cet obturateur 220 comporte deux volets 220a, 220b montés en rotation autour d'un même axe matériel d'obturateur 221 disposé perpendiculairement à la direction principale (axe X-X') de la canalisation 41, selon un axe Y-Y' (voir figure 10). Par exemple, les deux extrémités de l'axe matériel d'obturateur 221 sont encastrées dans les parois de la canalisation 41.

Les deux volets 220a, 220b présentent ici la forme d'un demi cercle dont le diamètre est monté sur l'axe matériel d'obturateur 221 et est plus faible que le diamètre de la canalisation 41. De cette façon, lorsque les deux volets 220a, 220b sont déployés, mettant l'obturateur 220 dans sa position fermée (figure 9 et 10), il persiste un passage d'air annulaire entre les deux volets 220a, 220b et la face interne de la paroi de la canalisation 41 : il s'agit de la section de passage minimale 222 permettant d'évacuer une quantité d'air suffisante pour tous les cas de fonctionnement même en cas de panne (deux volets 220a, 220b bloqués en position fermée).

On peut envisager que les volets 220a, 220b présentent un diamètre égal au diamètre intérieur de la canalisation 41, mais il est alors souhaitable que l'un d'entre eux ou les deux soi(en)t percé(s) pour laisser libre une section de passage minimale de l'air. Alternativement, ces volets 220a, 220b peuvent présenter d'autres formes que celle d'un demi cercle.

Dans ce cas, les moyens de commande 224 comprennent, pour chaque volet 220a (220b), un ressort 225a (225b) monté entre le volet 220a (220b) et un support 226. De cette façon, les volets 220a, 220b s'ouvrent sous l'effet de la force centrifuge lors de la rotation du rotor 40 et de la canalisation 41, lesdits ressorts 225a, 225b ayant tendance à ramener les volets 220a, 220b dans la position fermée.

Le support 226 est ici une plaque, parallèle à un plan passant par les axes X-X' et Y-Y' et montée dans la canalisation 41 à l'emplacement de l'un de ses diamètres, selon une direction parallèle à la direction principale (axe X-X') de la canalisation 41, de façon que seule la tranche de la plaque formant ce support 226 ne constitue un obstacle (et donc une perte de charge) pour l'écoulement de l'air dans la canalisation 41. Dans le cas représenté, l'axe matériel d'obturateur 221 est monté sur ce support 226 mais on peut se contenter de les aligner selon la direction principale (axe X-X') de la canalisation 41.

Le ressort 225a (225b) relie le bord du volet 220a (220b) éloigné de l'axe matériel d'obturateur 221 au support 226, en aval (arrière) de l'axe matériel d'obturateur 221 (à droite sur les figures 8 et 9), à une distance proche du demi-diamètre de chaque volet 220a (220b).

De cette façon, dans la position ouverte visible sur la figure 8, les deux volets 220a, 220b seront repliés et réduiront aussi peu que peu possible la section de passage de l'air dans la canalisation 41. Cela s'applique en particulier pour des faibles régimes moteur comme le ralenti où la faible pressurisation des enceintes 20, 30 nécessite des pertes de charges au niveau du circuit d'air aussi faibles que possible.

Ces deux volets 220a, 220b se refermeront ensuite en s'écartant sous l'effet de la force centrifuge (voir figure 9), réduisant ainsi la section de passage de l'air jusqu'à la section de passage minimale 222 annulaire, et augmentant les pertes de charges.

Ces deux volets 220a, 220b peuvent éventuellement être munis de masselottes 227a, 227b (voir figures 8 à 9) dont on choisira le poids et l'emplacement (par exemple suite aux premiers essais) afin d'optimiser les pertes de charges réalisées par le système de régulation 200 pour les différents cas de fonctionnement.

On comprend que les ressorts 225a, 225b constituent des moyens de rappel ramenant les deux volets 220a, 220b vers le support 226 afin de compenser les forces centrifuges (voir figure 9).

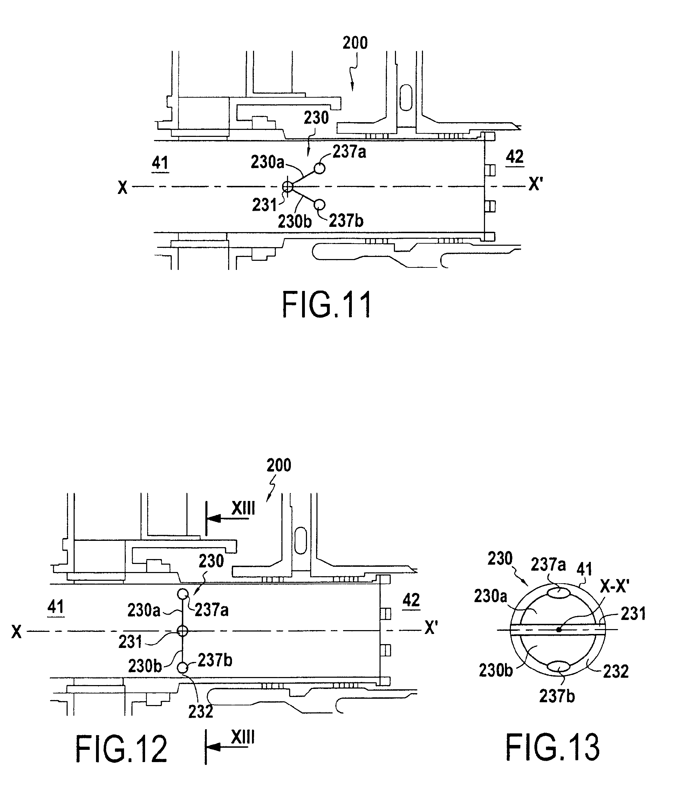

Selon une troisième variante du deuxième mode de réalisation, visible sur les figures 11 à 13, on utilise un système de régulation 200 comprenant un obturateur 230 d'un type légèrement différent de celui de la deuxième variante du deuxième mode de réalisation qui vient d'être décrite. Ce système de régulation 200 est toujours placé dans la canalisation mobile 41.

Comme on le voit, sur les figures 11 à 13, ledit obturateur 230 comporte deux ailes 230a, 230b montées autour d'un même axe matériel d'obturateur 231 disposé perpendiculairement à la direction principale (axe X-X') de la canalisation 41, lesdites ailes 230a, 230b étant réalisées dans un matériau élastique, de sorte que les ailes 230a, 230b s'ouvrent sous l'effet de la force centrifuge lors de la rotation du rotor 40 et reviennent vers la position fermée lorsque la vitesse de rotation du rotor 40 diminue.

Ici, l'obturateur 230 ne comporte pas deux volets séparés montés chacun en rotation autour de l'axe 231, mais l'obturateur 230 est une pièce unique élastique à deux ailes 230a, 230b à intégrer dans la canalisation mobile 41 du rotor 40. L'axe matériel d'obturateur 231 peut être formé en une seule pièce avec l'obturateur 230 ou bien constituer une pièce différente de l'obturateur 230 mais fixée à lui.

Les deux extrémités de l'axe matériel d'obturateur 231 sont par exemple encastrées dans les parois de la canalisation 41.

De part et d'autre de cet axe matériel d'obturateur 231, on retrouvera les deux ailes 230a, 230b (similaires à des demi-clapets) ayant une forme semi-circulaire dans l'exemple représenté (voir la figure 13).

Au repos ou position ouverte de l'obturateur 230, les deux ailes 230a, 230b sont repliées l'une vers l'autre autour de l'axe matériel d'obturateur 231.

De façon générale, ces deux ailes 230a, 230b auront une forme au repos qui réduira aussi peu que possible la section de passage de l'air dans la canalisation 41, aux faibles régimes (par exemple au régime moteur de ralenti où la faible pressurisation des enceintes 20, 30 nécessite des pertes de charges au niveau du circuit d'air aussi faibles que possible).

A plus haut régime, ces deux ailes 230a, 230b se déformeront de manière élastique sous l'effet de la force centrifuge et obstrueront davantage le passage de l'air jusqu'à la position fermée, représentée sur les figures 12 et 13, dans laquelle apparaît la section de passage minimale 232.

Ces deux ailes 230a, 230b reprennent leur position initiale (au repos) à l'issue de la décélération afin de garder leur efficacité tout le long du nombre important de cycles réalisés sur moteur. A cet effet, entre la position ouverte (figure 11) et la position fermée (figures 12 et 13) de l'obturateur 230, on ne dépasse pas la limite élastique en fatigue des deux ailes 230a, 230b.

Comme pour la deuxième variante du deuxième mode de réalisation, dans cette troisième variante, de manière facultative, le système de régulation 200 comporte en outre une masselotte 237a, 237b montée sur chaque aile 230a, 230b, en un point de l'aile 230a, 230b éloigné de l'axe matériel d'obturateur 231.

Dans les exemples décrits précédemment en relation avec le deuxième mode de réalisation, le dispositif d'équilibrage selon l'invention est monté dans un turboréacteur comprenant au moins une enceinte avant 20 et/ou une enceinte arrière 30 dont le circuit de dégazage comprend, en aval d'un déshuileur 24 ou 34, une canalisation 41 à l'intérieur du rotor basse pression 40, ce turboréacteur comportant un dispositif d'équilibrage de pression pour lequel le système de régulation 200 est monté dans le rotor basse pression.

Dans l'exemple décrit précédemment en relation avec le premier mode de réalisation, le dispositif d'équilibrage selon l'invention est monté dans un turboréacteur comprenant au moins une enceinte avant 20 et/ou une enceinte arrière 30, et un circuit de dégazage qui comprend, en aval du rotor basse pression 40, une canalisation fixe 42, ce turboréacteur comportant un dispositif d'équilibrage de pression pour lequel le système de régulation 100 est monté dans ladite canalisation fixe 42.

Selon une autre configuration visible sur la figure 14, le turboréacteur comprend au moins un palier avant dans une enceinte avant 20 et un palier arrière dans une enceinte arrière 30, et ici deux paliers intermédiaires disposés dans une enceinte intermédiaire 80. En aval de toutes ces enceintes 20, 30 et 80, le circuit de dégazage 60 comporte, en aval du déshuileur 64, une canalisation mobile en rotation 41 et une canalisation fixe 42. Selon l'invention, de façon caractéristique, le turboréacteur comporte un dispositif d'équilibrage de pression pour lequel le système de régulation 100 ou 200 est monté en aval du déshuileur 64, soit à l'emplacement A (canalisation fixe 42) de la figure 14 pour un dispositif selon le premier mode de réalisation, soit à l'emplacement B de la figure 14 (canalisation mobile 41) pour un dispositif selon le deuxième mode de réalisation.

Dans ce cas, avantageusement le déshuileur 64, en aval duquel le système de régulation 100 ou 200 est monté, est lui-même monté dans l'enceinte 66 d'un support d'équipements (ou « AGB » pour « Accessory Gearbox »).

Si l'on se reporte à nouveau sur les figures 1 et 2, il apparaît que les solutions décrites précédemment ont été mises en place à l'emplacement A de la figure 2 s'agissant du premier mode de réalisation (canalisation fixe 42) ou bien à l'emplacement B de la figure 2 s'agissant du deuxième mode de réalisation (canalisation mobile 41).

Ces choix d'implantation ne sont pas limitatifs et l"on peut également envisager d'implanter un dispositif d'équilibrage de pression selon le deuxième mode de réalisation de l'invention plus en amont du rotor 40, notamment dans la zone C des figures 1 et 2, c'est-à-dire après le déshuileur 24 de l'enceinte avant 20. Dans ce cas, cependant, seul le débit d'air pénétrant dans l'enceinte avant 20 sera affecté par le dispositif selon l'invention.

On peut encore prévoir une double implantation pour le dispositif d'équilibrage de pression selon l'invention : à la fois en aval du déshuileur 34 de l'enceinte arrière 30 comme décrit en relation avec les figures 3 à 13 (à l'emplacement A de la figure 2 s'agissant du premier mode de réalisation ou bien à l'emplacement B de la figure 2 s'agissant du deuxième mode de réalisation) et en aval du déshuileur 24 de l'enceinte avant 20 (zone C des figures 1 et 2) en y plaçant un dispositif d'équilibrage de pression selon le deuxième mode de réalisation de l'invention ou bien plus simplement un diaphragme avec une section de passage réduite constante.

Il faut noter que le dispositif d'équilibrage de pression selon l'invention s'applique pour des enceintes utilisant à titre de système d'étanchéité des joints de type labyrinthes, ce qui améliore leur aptitude à l'étanchéité en diminuant la différence de pression entre l'enceinte et l'extérieur de l'enceinte, mais également pour des systèmes d'étanchéité avancés dont les performances seront aussi améliorées.

## Revendications

1. Dispositif d'équilibrage de pression dans au moins une enceinte palier (20, 30, 80) de turboréacteur, ladite enceinte (20, 30, 80) étant délimitée entre un rotor (40) mobile en rotation autour d'un axe (X-X') et un stator comprenant un support de palier sur lequel est monté un palier (22, 32) s'appuyant sur ledit rotor (40), ladite enceinte (20, 30, 80) comprenant des moyens d'alimentation en liquide de lubrification dudit palier (22, 32), des moyens d'arrivée d'air amenant dans l'enceinte (20, 30, 80) de l'air sous pression provenant d'un circuit de pressurisation, au moins un système d'étanchéité (28) placé entre le stator et le rotor (40) à l'avant et/ou à l'arrière dudit palier (22, 32), des moyens de récupération du liquide de lubrification et des moyens d'évacuation (24, 34, 64) de l'air en direction d'un circuit de dégazage (60), **caractérisé en ce qu'**il comporte, en aval de l'enceinte palier (20, 30, 80) et dans une canalisation (41 ; 42) du circuit de dégazage, un système de régulation (100 ; 200) du débit d'air évacué qui modifie, en fonction du régime moteur, la section de passage de la canalisation (41 ; 42) entre une section de passage minimale (112 : 212 : 222 ; 232) non nulle et une section de passage maximale, ce qui permet audit débit d'être variable en fonction du régime du moteur, de rester non nul et de réduire la valeur du débit d'air évacué à haut régime par rapport au cas où le système de régulation est absent, et **en ce que** ledit système de régulation (100 ; 200) comporte un obturateur (110 : 210 : 220 ; 230) mobile entre une position fermée dans laquelle ledit obturateur occupe une grande partie de la section de la canalisation (41 ; 42) qui présente alors une section de passage minimale (112 : 212 : 222 ; 232) et une position ouverte dans laquelle ledit obturateur (110 : 210 : 220 ; 230) occupe une petite partie de la section de la canalisation (41 ; 42) qui présente alors une section de passage maximale, ledit obturateur (110 ;210 : 220 ; 230) pouvant prendre toutes les positions intermédiaires entre ladite position fermée et ladite position ouverte.

2. Dispositif selon la revendication 1, **caractérisé en ce que** le débit d'air évacué est minimal et non nul pour un régime moteur bas et variable, en allant en augmentant avec l'augmentation du régime moteur jusqu'à un débit d'air évacué maximal.

3. Dispositif selon la revendication 2, **caractérisé en ce que** la canalisation (42) est fixe et **en ce que** ledit obturateur (110) est relié à des moyens de commande extérieurs à la canalisation (42) et aptes à commander la position de l'obturateur (110) dans la canalisation (42) en fonction du régime moteur.

4. Dispositif selon la revendication 2, **caractérisé en ce que** la canalisation (41) est mobile en rotation par le fait qu'elle est fixée au rotor (40) et donc entraînée en rotation par ledit rotor et **en ce que** ledit obturateur (210 : 220 ; 230) est relié à des moyens de commande intégrés (214 ; 224) à la canalisation (41) et modifiant la position dudit obturateur (210 : 220 ; 230) en fonction de la vitesse de rotation du rotor (40) qui varie avec le régime moteur.

5. Dispositif selon la revendication 3 ou 4, **caractérisé en ce que** l'obturateur est une plaque (110 ; 210) montée de façon mobile en rotation autour d'un axe perpendiculaire à la direction principale (X-X') de la canalisation (41 ; 42), le plan principal de ladite plaque (110 ; 210) étant disposé transversalement dans la canalisation (41 ; 42) dans la position fermée dans laquelle il subsiste ladite section de passage minimale (112 ; 212) non nulle entre la plaque (110 ; 210) et la paroi de la canalisation (41 ; 42) pour le passage du débit d'air minimal, et le plan principal de ladite plaque (110 ; 210) étant disposé parallèlement à la direction principale de la canalisation dans la position ouverte.

6. Dispositif selon la revendication 5, **caractérisé en ce que** l'obturateur est une plaque circulaire (110 ; 210) percée présentant un diamètre extérieur sensiblement égal au diamètre intérieur de la canalisation (41 ; 42).

7. Dispositif selon la revendication 4 et l'une quelconque des revendications 5 et 6, **caractérisé en ce que** les moyens de commande (214) comprennent une tige de commande (215) dont l'une des extrémités (215a) est reliée par une liaison rotule (216a) à ladite plaque (210), une masselotte (217) reliée par une liaison rotule (216b) à l'autre des extrémités (215b) de la tige de commande (215) et comprenant un perçage, et une tige d'entrainement (218) fixée à ladite canalisation (42) en étant disposée selon une direction oblique à un plan transversal à ladite canalisation (42), ladite masselotte (217) étant est montée en coulissement autour de ladite tige d'entrainement (218).

8. Dispositif selon la revendication 4, **caractérisé en ce que** ledit obturateur (220) comporte deux volets (220a, 220b) montés en rotation autour d'un même axe d'obturateur (221) disposé perpendiculairement à la direction principale (X-X') de la canalisation (41) et **en ce que** les moyens de commande (224) comprennent, pour chaque volet (220a, 220b), un ressort (225a, 225b) monté entre le volet (220a, 220b) et un support (226), de sorte que les volets (220a, 220b) s'ouvrent sous l'effet de la force centrifuge lors de la rotation du rotor (40), lesdits ressorts (225a, 225b) ayant tendance à ramener les volets (220a, 220b) dans la position fermée.

9. Dispositif selon la revendication 4, **caractérisé en ce que** ledit obturateur comporte deux ailes (230a, 230b) montées autour d'un même axe d'obturateur (231) disposé perpendiculairement à la direction principale de la canalisation (41), lesdites ailes (230a, 230b) étant réalisées dans un matériau élastique, de sorte que les ailes (230a, 230b) s'ouvrent sous l'effet de la force centrifuge lors de la rotation du rotor (40) et reviennent vers la position fermée lorsque la vitesse de rotation du rotor (40) diminue.

10. Dispositif selon la revendication 8 ou 9, **caractérisé en ce qu'**il comporte en outre une masselotte (227a, 227b ; 237a, 237b) montée sur chaque volet (220a, 220b) ou aile (230a, 230b) de l'obturateur (220, 230).

11. Turboréacteur comprenant au moins une enceinte avant (20) et/ou une enceinte arrière (30), en aval desquelles le circuit de dégazage (60) comporte, en aval d'un déshuileur (64), une canalisation mobile en rotation (41) et une canalisation fixe (42), **caractérisé en ce qu'**il comporte un dispositif selon l'une quelconque des revendications 1 à 10 pour lequel le système de régulation est monté en aval du déshuileur (64).

12. Turboréacteur comprenant au moins une enceinte avant (20) et/ou une enceinte arrière (30) dont le circuit de dégazage comprend, en aval d'un déshuileur (24, 34), une canalisation (41) à l'intérieur du rotor basse pression (40), **caractérisé en ce qu'**il comporte un dispositif selon l'une quelconque des revendications 1 et 4 à 10 pour lequel le système de régulation (200) est monté dans le rotor basse pression (40).

13. Turboréacteur comprenant au moins une enceinte avant (20) et/ou une enceinte arrière (30), et un circuit de dégazage (60) qui comprend, en aval du rotor basse pression (40), une canalisation fixe (42), **caractérisé en ce qu'**il comporte un dispositif selon l'une quelconque des revendications 1, 5 et 6 pour lequel le système de régulation (100) est monté dans ladite canalisation fixe (42).

14. Procédé d'équilibrage de pression dans au moins une enceinte palier (20, 30, 80) de turboréacteur, ladite enceinte (20, 30, 80) étant délimitée entre un rotor (40) mobile en rotation autour d'un axe (X-X') et un stator comprenant un support de palier sur lequel est monté un palier (22, 32) s'appuyant sur ledit rotor (40), ladite enceinte (20, 30, 80) comprenant des moyens d'alimentation en liquide de lubrification dudit palier (22, 32), des moyens d'arrivée d'air amenant dans l'enceinte (20, 30, 80) de l'air sous pression provenant d'un circuit de pressurisation, au moins un système d'étanchéité (28) placé entre le stator et le rotor (40) à l'avant et/ou à l'arrière dudit palier (22, 32), des moyens de récupération du liquide de lubrification (39) et des moyens d'évacuation (24, 34, 64) de l'air en direction d'un circuit de dégazage (60), **caractérisé en ce qu'**il consiste à réguler, en fonction du régime du moteur, le débit d'air évacué en aval de l'enceinte palier, dans une canalisation (41 ; 42) du circuit de dégazage (60), en modifiant, en fonction du régime moteur, la section de passage de la canalisation (41 ; 42) entre une section de passage minimale (112 : 212 : 222 ; 232) non nulle et une section de passage maximale, ce par quoi ledit débit d'air est variable en fonction du régime du moteur, non nul et plus faible à haut régime par rapport au cas où il n'y a pas de régulation du débit d'air, et **en ce qu'**on régule au moyen d'un obturateur (110 : 210 : 220 ; 230) mobile entre une position fermée dans laquelle ledit obturateur occupe une grande partie de la section de la canalisation (41 ; 42) qui présente alors une section de passage minimale (112 : 212 : 222 ; 232) et une position ouverte dans laquelle ledit obturateur (110 : 210 : 220 ; 230) occupe une petite partie de la section de la canalisation (41 ; 42) qui présente alors une section de passage maximale, ledit obturateur (110 ;210 : 220 ; 230) pouvant prendre toutes les positions intermédiaires entre ladite position fermée et ladite position ouverte.

15. Procédé d'équilibrage de pression selon la revendication précédente, **caractérisé en ce que** le débit d'air évacué est minimal et non nul pour un régime moteur bas et variable, en allant en augmentant avec l'augmentation du régime moteur jusqu'à un débit d'air évacué maximal.

## Patentansprüche

1. Vorrichtung zum Druckausgleich in wenigstens einem Lager-Raum (20, 30, 80) eines Turbostrahltriebwerks, wobei der Raum (20, 30, 80) zwischen einem um eine Achse (X-X') drehbeweglichen Rotor (40) und einem Stator mit einem Lagerträger, an dem ein sich an dem Rotor (40) abstützendes Lager (22, 32) angebracht ist, begrenzt ist, wobei der Raum (20, 30, 80) Mittel zur Versorgung des Lagers (22, 32) mit Schmierflüssigkeit, Luftzuführmittel, die in den Raum (20, 30, 80) aus einem Druckbeaufschlagungskreis stammende Druckluft führen, wenigstens ein Dichtungssystem (28), das zwischen dem Stator und dem Rotor (40) am vorderen Teil und/oder am hinteren Teil des Lagers (22, 32) angeordnet ist, Mittel zur Rückgewinnung der Schmierflüssigkeit sowie Mittel zum Abführen (24, 34, 64) der Luft in Richtung eines Entlüftungskreises (60) umfasst, **dadurch gekennzeichnet, dass** sie dem Lager-Raum (20, 30, 80) nachgeschaltet und in einer Rohrleitung (41; 42) des Entlüftungskreises ein System zur Regelung (100; 200) der Menge abgeführter Luft umfasst, das in Abhängigkeit von der Triebwerkdrehzahl den Durchlassquerschnitt der Rohrleitung (41; 42) zwischen einem minimalen Durchlassquerschnitt (112 : 212 : 222; 232) ungleich null und einem maximalen Durchlassquerschnitt verändert, wodurch die Menge in Abhängigkeit von der Drehzahl des Triebwerks variabel sein kann, ungleich null bleiben kann, und was ermöglicht, den Wert der Menge abgeführter Luft bei hoher Drehzahl gegenüber dem Fall, in dem das Regelungssystem nicht vorhanden ist, zu reduzieren, und dass das Regelungssystem (100; 200) ein Verschlussorgan (110 : 210 : 220; 230) umfasst, das zwischen einer geschlossenen Stellung, in der das Verschlussorgan eine großen Teil des Querschnitts der Rohrleitung (41; 42) einnimmt, die dann einen minimalen Durchlassquerschnitt (112 : 212 : 222; 232) aufweist, und einer geöffneten Stellung, in der das Verschlussorgan (110 : 210 : 220; 230) einen kleinen Teil des Querschnitts der Rohrleitung (41; 42) einnimmt, die dann einen maximalen Durchlassquerschnitt aufweist, beweglich ist, wobei das Verschlussorgan (110; 210 : 220; 230) alle Zwischenstellungen zwischen der geschlossenen Stellung und der geöffneten Stellung einnehmen kann.

2. Vorrichtung nach Anspruch 1, **dadurch gekennzeichnet, dass** die Menge abgeführter Luft bei einer niedrigen Triebwerkdrehzahl minimal und ungleich null ist und mit zunehmender Triebwerkdrehzahl bis zu einer maximalen Menge abgeführter Luft ansteigend variabel ist.

3. Vorrichtung nach Anspruch 2, **dadurch gekennzeichnet, dass** die Rohrleitung (42) fest ist und dass das Verschlussorgan (110) mit Steuermitteln verbunden ist, die außerhalb der Rohrleitung (42) gelegen und geeignet sind, die Stellung des Verschlussorgans (110) in der Rohrleitung (42) in Abhängigkeit von der Triebwerkdrehzahl zu steuern.

4. Vorrichtung nach Anspruch 2, **dadurch gekennzeichnet, dass** die Rohrleitung (41) dadurch drehbeweglich ist, dass sie an dem Rotor (40) befestigt ist und folglich durch den Rotor drehangetrieben wird, und dass das Verschlussorgan (210 : 220; 230) mit Steuermitteln verbunden ist, die in die Rohrleitung (41) integriert sind (214; 224) und die Stellung des Verschlussorgans (210 : 220; 230) in Abhängigkeit von der Drehgeschwindigkeit des Rotors (40), die mit der Triebwerkdrehzahl variiert, verändern.

5. Vorrichtung nach Anspruch 3 oder 4, **dadurch gekennzeichnet, dass** das Verschlussorgan eine Platte (110; 210) ist, die um eine zur Hauptrichtung (X-X') der Rohrleitung (41; 42) senkrechte Achse drehbeweglich angebracht ist, wobei die Hauptebene der Platte (110; 210) in der geschlossenen Stellung, in der der minimale Durchlassquerschnitt (112; 212) ungleich null zwischen der Platte (110; 210) und der Wand der Rohrleitung (41; 42) für den Durchgang der minimalen Luftmenge bestehenbleibt, quer in der Rohrleitung (41; 42) angeordnet ist, und wobei die Hauptebene der Platte (110; 210) in der geöffneten Stellung parallel zur Hauptrichtung der Rohrleitung angeordnet ist.

6. Vorrichtung nach Anspruch 5, **dadurch gekennzeichnet, dass** das Verschlussorgan eine durchbohrte kreisförmige Platte (110; 210) ist, die einen Außendurchmesser aufweist, der im Wesentlichen gleich dem Innendurchmesser der Rohrleitung (41; 42) ist.

7. Vorrichtung nach Anspruch 4 und einem der Ansprüche 5 und 6, **dadurch gekennzeichnet, dass** die Steuermittel (214) eine Steuerstange (215), deren eines Ende (215a) über eine Kugelgelenkverbindung (216a) mit der Platte (210) verbunden ist, ein Fliehgewicht (217), das über eine Kugelgelenkverbindung (216b) mit dem anderen der Enden (215b) der Steuerstange (215) verbunden ist und eine Bohrung aufweist, sowie eine Antriebsstange (218) umfassen, die - in einer Richtung schräg zu einer zur Rohrleitung (42) querverlaufenden Ebene angeordnet - an der Rohrleitung (42) befestigt ist, wobei das Fliehgewicht (217) um die Antriebsstange (218) verschieblich angebracht ist.

8. Vorrichtung nach Anspruch 4, **dadurch gekennzeichnet, dass** das Verschlussorgan (220) zwei Klappen (220a, 220b) umfasst, die um eine gleiche Verschlussorganachse (221), welche zu der Hauptrichtung (X-X') der Rohrleitung (41) senkrecht angeordnet ist, drehbar angebracht sind, und dass die Steuermittel (224) für jede Klappe (220a, 220b) eine Feder (225a, 225b) umfassen, die zwischen der Klappe (220a, 220b) und einem Träger (226) angebracht ist, so dass die Klappen (220a, 220b) sich unter der Wirkung der Fliehkraft während der Rotation des Rotors (40) öffnen, wobei die Federn (225a, 225b) dazu neigen, die Klappen (220a, 220b) in die geschlossene Stellung zurückzubringen.

9. Vorrichtung nach Anspruch 4, **dadurch gekennzeichnet, dass** das Verschlussorgan zwei Flügel (230a, 230b) umfasst, die um eine gleiche Verschlussorganachse (231), welche zu der Hauptrichtung der Rohrleitung (41) senkrecht angeordnet ist, angebracht sind, wobei die Flügel (230a, 230b) aus einem elastischen Material ausgebildet sind, so dass die Flügel (230a, 230b) sich unter der Wirkung der Fliehkraft während der Rotation des Rotors (40) öffnen und in die geschlossene Stellung zurückkommen, wenn die Drehgeschwindigkeit des Rotors (40) abnimmt.

10. Vorrichtung nach Anspruch 8 oder 9, **dadurch gekennzeichnet, dass** sie ferner ein Fliehgewicht (227a, 227b; 237a, 237b), das an jeder Klappe (220a, 220b) oder jedem Flügel (230a, 230b) des Verschlussorgans (220, 230) angebracht ist, umfasst.

11. Turbostrahltriebwerk, umfassend wenigstens einen vorderen Raum (20) und/oder einen hinteren Raum (30), denen nachgeschaltet der Entlüftungskreis (60), einem Ölabscheider (64) nachgelagert, eine drehbewegliche Rohrleitung (41) und eine feste Rohrleitung (42) umfasst, **dadurch gekennzeichnet, dass** es eine Vorrichtung nach einem der Ansprüche 1 bis 10 umfasst, bei der das Regelungssystem dem Ölabscheider (64) nachgeschaltet ist.

12. Turbostrahltriebwerk, umfassend wenigstens einen vorderen Raum (20) und/oder einen hinteren Raum (30), dessen Entlüftungskreis, einem Ölabscheider (24, 34) nachgeschaltet, eine Rohrleitung (41) innerhalb des Niederdruckrotors (40) umfasst, **dadurch gekennzeichnet, dass** es eine Vorrichtung nach einem der Ansprüche 1 und 4 bis 10 umfasst, bei der das Regelungssystem (200) in dem Niederdruckrotor (40) angebracht ist.

13. Turbostrahltriebwerk, umfassend wenigstens einen vorderen Raum (20) und/oder einen hinteren Raum (30) sowie einen Entlüftungskreis (60), der dem Niederdruckrotor (40) nachgeschaltet eine feste Rohrleitung (42) umfasst, **dadurch gekennzeichnet, dass** es eine Vorrichtung nach einem der Ansprüche 1, 5 und 6 umfasst, bei der das Regelungssystem (100) in der festen Rohrleitung (42) angebracht ist.

14. Verfahren zum Druckausgleich in wenigstens einem Lager-Raum (20, 30, 80) eines Turbostrahltriebwerks, wobei der Raum (20, 30, 80) zwischen einem um eine Achse (X-X') drehbeweglichen Rotor (40) und einem Stator mit einem Lagerträger, an dem ein sich an dem Rotor (40) abstützendes Lager (22, 32) angebracht ist, begrenzt ist, wobei der Raum (20, 30, 80) Mittel zur Versorgung des Lagers (22, 32) mit Schmierflüssigkeit, Luftzuführmittel, die in den Raum (20, 30, 80) aus einem Druckbeaufschlagungskreis stammende Druckluft führen, wenigstens ein Dichtungssystem (28), das zwischen dem Stator und dem Rotor (40) am vorderen Teil und/oder am hinteren Teil des Lagers (22, 32) angeordnet ist, Mittel zur Rückgewinnung der Schmierflüssigkeit (39) sowie Mittel zum Abführen (24, 34, 64) der Luft in Richtung eines Entlüftungskreises (60) umfasst, **dadurch gekennzeichnet, dass** es darin besteht, in Abhängigkeit von der Drehzahl des Triebwerks die Menge abgeführter Luft stromabwärts des Lager-Raums, in einer Rohrleitung (41; 42) des Entlüftungskreises (60), dadurch zu regeln, dass in Abhängigkeit der Triebwerkdrehzahl der Durchlassquerschnitt der Rohrleitung (41; 42) zwischen einem minimalen Durchlassquerschnitt (112 : 212 : 222; 232) ungleich null und einem maximalen Durchlassquerschnitt verändert wird, wodurch die Luftmenge in Abhängigkeit von der Drehzahl des Triebwerks variabel ist, ungleich null ist und gegenüber dem Fall, in dem keine Luftmengenregelung vorhanden ist, bei hoher Drehzahl geringer ist, und dass mittels eines Verschlussorgans (110 : 210 : 220; 230) geregelt wird, das zwischen einer geschlossenen Stellung, in der das Verschlussorgan eine großen Teil des Querschnitts der Rohrleitung (41; 42) einnimmt, die dann einen minimalen Durchlassquerschnitt (112 : 212 : 222; 232) aufweist, und einer geöffneten Stellung, in der das Verschlussorgan (110 : 210 : 220; 230) einen kleinen Teil des Querschnitts der Rohrleitung (41; 42) einnimmt, die dann einen maximalen Durchlassquerschnitt aufweist, beweglich ist, wobei das Verschlussorgan (110; 210 : 220; 230) alle Zwischenstellungen zwischen der geschlossenen Stellung und der geöffneten Stellung einnehmen kann.

15. Druckausgleichsverfahren nach dem vorhergehenden Anspruch, **dadurch gekennzeichnet, dass** die Menge abgeführter Luft bei einer niedrigen Triebwerkdrehzahl minimal und ungleich null ist und mit zunehmender Triebwerkdrehzahl bis zu einer maximalen Menge abgeführter Luft ansteigend variabel ist.

## Claims

1. A pressure-balancing device for balancing pressure in at least one bearing enclosure (20, 30, 80) of a turbojet, said enclosure (20, 30, 80) being defined between a rotor (40) mounted to rotate about an axis (X-X') and a stator including a bearing support on which a bearing (22, 32) is mounted that bears against said rotor (40), said enclosure (20, 30, 80) including means for feeding said bearing (22, 32) with lubricating liquid, air intake means bringing into the enclosure (20, 30, 80) pressurized air coming from a pressurization circuit, at least one sealing system (28) placed between the stator and the rotor (40) in front of and/or behind said bearing (22, 32), recovery means for recovering the lubricating liquid and removal means (24, 34, 64) for removing the air towards a venting circuit (60), said pressure-balancing device being **characterized in that**, downstream from the bearing enclosure (20, 30, 80) and in a duct (41; 42) of the venting circuit, said device includes a regulator system (100; 200) for regulating the flow rate of air removal that, as a function of engine speed, changes the flow section of the duct (41; 42) between a non-zero minimum flow section (112; 212; 222; 232) and a maximum flow section thus enabling said flow rate to be variable as a function of engine speed, to remain non-zero, and, at high speeds, to be lower than when the regulator system is absent, and **in that** said regulator system (100; 200) has a shut-off member (110; 210; 220; 230) mounted to move between a closed position in which said shut-off member occupies a large fraction of the section of the duct (41; 42) that then has a minimum flow section (112; 212; 222; 232) and an open position in which said shut-off member (110; 210; 220; 230) occupies a small fraction of the section of the duct (41; 42) that then has a maximum flow section, it being possible for said shut-off member (110; 210; 220; 230) to take up any intermediate position between said closed position and said open position.

2. A device according to claim 1, **characterized in that** the air removal flow rate is at a non-zero minimum value for low engine speed and is variable, increasing with increasing engine speed up to a maximum air removal flow rate.

3. A device according to claim 2, **characterized in that** the duct (42) is stationary, and **in that** said shut-off member (110) is connected to control means external to the duct (42) and suitable for controlling the position of the shut-off member (110) in the duct (42) as a function of the engine speed.

4. A device according to claim 2, **characterized in that** the duct (41) is mounted to rotate by the fact that it is fastened to the rotor (40) and is thus driven in rotation by said rotor, and **in that** said shut-off member (210; 220; 230) is connected to control means (214; 224) incorporated into the duct (41) and changing the position of said shut-off member (210; 220; 230) as a function of the speed of rotation of the rotor (40) that varies with varying engine speed.

5. A device according to claim 3 or claim 4, **characterized in that** the shut-off member is a plate (110; 210) mounted to pivot about an axis that is perpendicular to the main direction (X-X') of the duct (41; 42), the main plane of said plate (110; 210) being disposed transversely in the duct (41; 42) in the closed position in which there remains said minimum non-zero flow section (112; 212) between the plate (110; 210) and the wall of the duct (41; 42) for passing the minimum air flow rate, and the main plane of said plate (110; 210) being disposed parallel to the main direction of the duct in the open position.

6. A device according to claim 5, **characterized in that** the shut-off member is a circular plate (110; 210) provided with a through hole and having an outside diameter that is substantially equal to the inside diameter of the duct (41; 42).

7. A device according to claim 4, and to claim 5 or claim 6, **characterized in that** the control means (214) comprise a control rod (215) having one of its ends (215a) connected via a ball joint (216a) to said plate (210), a flyweight (217) connected via a ball joint (216b) to the other of the ends (215b) of the control rod (215) and provided with a through hole, and a drive rod (218) fastened to said duct (42) while being disposed in a direction that slants relative to a plane transverse to said duct (42), said flyweight (217) being mounted to slide about said drive rod (218).

8. A device according to claim 4, **characterized in that** said shut-off member (220) has two flaps (220a, 220b) mounted to pivot about a common shut-off member pin (221) disposed perpendicularly to the main direction (X-X') of the duct (41), and **in that**, for each flap (220a, 220b), the control means (224) comprise a spring (225a, 225b) mounted between the flap (220a, 220b) and a support (226), so that the flaps (220a, 220b) open under the effect of the centrifugal force while the rotor (40) is rotating, said springs (225a, 225b) urging the flaps (220a, 220b) back into the closed position.

9. A device according to claim 4, **characterized in that** said shut-off member has two branches (230a, 230b) mounted around a common shut-off member pin (231) disposed perpendicularly to the main direction of the duct (41), said branches (230a, 230b) being made of an elastic material, so that the branches (230a, 230b) open under the effect of the centrifugal force while the rotor (40) is rotating, and return to the closed position when the speed of rotation of the rotor (40) decreases.

10. A device according to claim 8 or claim 9, **characterized in that** it further includes a flyweight (227a, 227b; 237a, 237b) mounted on each flap (220a, 220b) or branch (230a, 230b) of the shut-off member (220, 230).

11. A turbojet having at least a front enclosure (20) and/or a rear enclosure (30), downstream from which, and downstream from a de-oiler (64), the venting circuit (60) includes a duct (41) mounted to rotate and a duct (42) mounted to be stationary, said turbojet being **characterized in that** it includes a device according to any one of claims 1 to 10, for which the regulator system is mounted downstream from the de-oiler (64).

12. A turbojet including at least a front enclosure (20) and/or a rear enclosure (30) having a venting circuit that, downstream from a de-oiler (24, 34), includes a duct (41) inside the low-pressure rotor (40), said turbojet being **characterized in that** it includes a device according to any one of claims 1 and 4 to 10, for which device the regulator system (200) is mounted in the low-pressure rotor (40).

13. A turbojet including at least a front enclosure (20) and/or a rear enclosure (30) having a venting circuit (60) that, downstream from the low-pressure rotor (40), includes a stationary duct (42), said turbojet being **characterized in that** it includes a device according to any one of claims 1, 5 and 6, for which device the regulator system (100) is mounted in said stationary duct (42).

14. A method of balancing pressure in at least one bearing enclosure (20, 30, 80) of a turbojet, said enclosure (20, 30, 80) being defined between a rotor (40) mounted to rotate about an axis (X-X') and a stator including a bearing support on which a bearing (22, 32) is mounted that bears against said rotor (40), said enclosure (20, 30, 80) including means for feeding said bearing (22, 32) with lubricating liquid, air intake means bringing into the enclosure (20, 30, 80) pressurized air coming from a pressurization circuit, at least one sealing system (28) placed between the stator and the rotor (40) in front of and/or behind said bearing (22, 32), recovery means for recovering the lubricating liquid (39) and removal means (24, 34, 64) for removing the air towards a venting circuit (60), said method being **characterized in that** it consists in regulating, as a function of engine speed, the air removal flow rate downstream from the bearing enclosure, in a duct (41; 42) of the venting circuit (60), by, as a function of engine speed, changing the flow section of the duct (41; 42) between a minimum flow section (112; 212; 222; 232) that is not zero and a maximum flow, by which said air flow rate is variable as a function of the speed of the engine, non-zero, and, at high speeds, lower than when the flow rate of air is not regulated, and **in that** said flow rate is regulated by means of a shut-off member (110; 210; 220; 230) mounted to move between a closed position in which said shut-off member occupies a large fraction of the section of the duct (41; 42) that then has a minimum flow section (112; 212; 222; 232) and an open position in which said shut-off member (110; 210; 220; 230) occupies a small fraction of the section of the duct (41; 42) that then has a maximum flow section, it being possible for said shut-off member (110; 210; 220; 230) to take up any intermediate position between said closed position and said open position.

15. A method of balancing pressure according to the preceding claim, **characterized in that** the air removal flow rate is at a non-zero minimum value for low engine speed and is variable, increasing with increasing engine speed up to a maximum air removal flow rate.
